# EUROPÄISCHE PATENTSCHRIFT

(11) **EP 2 008 874 B1**
(45) Veröffentlichungstag und Bekanntmachung des Hinweises auf die Patenterteilung: **21.10.2009**
(21) Anmeldenummer: 08005799.5
(22) Anmeldetag: 27.03.2008
(51) Int. Cl.: B60R 15/00

(54) **Einachsiger Wohnwagen**
Single axle caravan
Caravane à un axe

(30) Priorität: 28.06.2007 DE 202007009092 U
(43) Veröffentlichungstag der Anmeldung: 31.12.2008
(73) Patentinhaber: REIMO Reisemobil-Center GmbH, 63329 Egelsbach (DE)
(72) Erfinder: Holona, Günther, 63329 Egelsbach (DE)
(74) Vertreter: Katscher Habermann Patentanwälte

(56) Entgegenhaltungen:
- WO-A-87/07665
- WO-A-20/05120901
- DE-A1- 4 311 037

## Beschreibung

Die Erfindung betrifft einen einachsigen Wohnwagen mit einer starren Deichsel und mit einem im Bereich der Deichsel oder an einem entgegengesetzten Ende des Wohnwagens angeordneten Stauraum. Ein solcher Wohnwagen ist in dem Dokument DE-A-4311037 offenbart.

Als Wohnwagen werden Anhänger für Kraftfahrzeuge bezeichnet, in denen sich eine Wohnungseinrichtung befindet. Üblicherweise sind die meisten Wohnwagen, die mit PKWs oder Geländewagen gezogen werden können, einachsig aufgebaut und mit einer starren Deichsel versehen. Statt einer einzelnen, fest an dem Rahmen des Wohnwagens gelagerten Achse können auch zwei unmittelbar hintereinander angeordnete, fest gelagerte Achsen vorgesehen sein, die zumindest bei größeren Wohnwagen von mehr als 4 m Länge hinsichtlich der Fahreigenschaften und der Kippsicherheit wie eine einzige Achse wirken. Derartige Wohnwagen weisen eine starre Deichsel auf, die mit dem ziehenden Kraftfahrzeug verbunden werden kann.

In dem Wohnwagen befinden sich üblicherweise zwei bis vier Schlafplätze, die je nach Ausstattung und Anordnung tagsüber zu Sitzgruppen umgebaut werden können. Regelmäßig befinden sich auch eine Kochgelegenheit sowie eine Waschgelegenheit in dem Wohnwagen, der zu diesem Zweck eine Wasserversorgung sowie eine Stromversorgung bzw. eine Gasversorgung aufweisen muss.

Es ist aus der Praxis bekannt, dass entweder im Bereich der Deichsel oder an einem entgegengesetzten Ende des Wohnwagens ein größerer Stauraum angeordnet oder zumindest vorgesehen ist, der zur Aufnahme von sperrigen oder nicht im Innenraum des Wohnwagens benötigten Gegenständen verwendet werden kann. Der Stauraum kann dabei von dem Inneren des Wohnwagens aus oder, wie in den meisten Fällen, von außen aus zugänglich sein. Um einen angemessenen Schutz vor beispielsweise Regen oder Schmutz zu bieten ist der Stauraum oft in Form eines verschließbaren Kastens ausgestaltet. In einigen Fällen wie beispielsweise einer Haltevorrichtung für Fahrräder am Ende des Wohnwagens kann der Stauraum auch ausschließlich durch eine geeignete Standfläche oder Haltevorrichtung gebildet werden.

Eine sinnvolle Nutzung des oftmals voluminösen Stauraums wird jedoch dadurch erschwert oder sogar unmöglich gemacht, dass die über die Deichsel auf das ziehende Kraftfahrzeug ausgeübte Auflagelast für jeden Wohnwagentyp innerhalb enger Grenzen vorgegeben ist und während der Fahrt mit dem Wohnwagen eingehalten werden muss.

Um die Fahreigenschaften nicht unangemessen zu beeinträchtigen, sollte die von der Deichsel auf das ziehende Kraftfahrzeug ausgeübte Auflagelast üblicherweise zwischen etwa 40 - 70 kg betragen, wobei die Auflagelast auf das ziehende Kraftfahrzeug sowie den Wohnwagen abgestimmt sein sollte. Eine zu große Auflagelast würde die Hinterradachse des ziehenden Kraftfahrzeugs übermäßig belasten, während eine zu geringe Auflagelast dazu führen könnte, dass insbesondere bei Bodenunebenheiten der Wohnwagen größere Schwenkbewegungen um die eigene Radachse ausführen könnte und dabei die Hinterradachse des ziehenden Fahrzeugs zu stark entlasten bzw. sogar anheben könnte. Vor jeder Fahrt muss deshalb die in Abhängigkeit von der Einrichtung und Beladung des Wohnwagens über die Deichsel ausgeübte Auflagelast gemessen und auf einen innerhalb des zulässigen Bereichs liegenden Wert eingestellt werden.

Die Möblierung und Standardeinrichtung eines jeden Wohnwagens ist üblicherweise darauf ausgerichtet, dass die über die Deichsel ausgeübte Auflagelast innerhalb des zulässigen Bereichs liegt. Wenn jedoch beispielsweise zusätzlich Gartenmöbel, Fahrräder oder ein Grill mitgenommen werden sollen, so muss darauf geachtet werden, dass die Auflagelast auch bei der zusätzlichen Beladung innerhalb des zulässigen Bereichs bleibt.

Der im Bereich der Deichsel oder an einem entgegengesetzten Ende des Wohnwagens angeordnete Stauraum ist oftmals ausreichend groß, um ein zusätzliches Staugewicht in Höhe von 150 oder 200 kg mitführen zu können. Dies führt jedoch regelmäßig dazu, dass die Auflagelast unzulässig große Werte erreicht.

Aus der Praxis ist es bekannt, dass beispielsweise das gesamte Reisegepäck während der Fahrt in dem der Deichsel gegenüberliegenden Ende das Wohnwagens gestapelt wird, um auf diese Weise ein Gegengewicht zu den oftmals schweren Gegenständen zu bilden, die in dem im Bereich der Deichsel angeordneten Stauraum mitgeführt werden. Dies erfordert jedoch ein sorgfältiges Ausbalancieren vor Antritt der Reise sowie ein ständiges und umständliches Be- und Entladen des Reisegepäcks bei jedem längeren Halt.

Es sind auch Wohnwagen bekannt, die an Stelle einer fest an dem Rahmen des Wohnwagens gelagerten Achse eine verstellbare Achse aufweisen, die je nach Beladung des Stauraums etwas weiter nach vorne bzw. etwas weiter nach hinten verlagert werden kann. Die Anforderungen an einen derartigen Verstellmechanismus sind auf Grund des oftmals hohen Eigengewichts des Wohnwagens und der während der Fahrt auftretenden Belastungen jedoch sehr hoch, so dass die zusätzlich mitführbare Nutzlast in dem Stauraum nahe der Deichsel in keinem Verhältnis zu den zusätzlich anfallenden Kosten steht.

Es besteht auch die Möglichkeit, mit zunehmender Beladung des im Bereich der Deichsel angeordneten Stauraums ein entsprechendes Ballastgewicht an dem anderen Ende des Wohnwagens mitzuführen. Neben einem erhöhten Treibstoffverbrauch und einer nachteiligen Beeinträchtigung der Fahreigenschaften führt dies jedoch dazu, dass die in den meisten Fällen knapp bemessene maximale Nutzlast weiter reduziert wird.

Aufgabe der vorliegenden Erfindung ist es demzufolge, einen Wohnwagen der eingangs genannten Gattung so auszugestalten, dass der im Bereich der Deichsel oder an einem entgegengesetzten Ende des Wohnwagens angeordnete Stauraum mit einer möglichst großen Nutzlast beladen werden kann und gleichzeitig die über die Deichsel ausgeübte Auflagelast mit einfachen Mitteln und möglichst geringem zusätzlichen Ballast innerhalb des zulässigen Bereichs eingestellt werden kann.

Diese Aufgabe wird erfindungsgemäß dadurch gelöst, dass der Wohnwagen im Bereich der Deichsel einen ersten Wassertank und an dem entgegen gesetzten Ende einen zweiten Wassertank aufweist und die beiden Wassertanks über eine Verbindungsleitung miteinander verbunden sind. Die meisten Wohnwagen sind mit einem Frischwassertank ausgestattet, der eine Kapazität zwischen 20 und 70 1 aufweist. Der Wassertank wird üblicherweise vor Beginn der Fahrt befüllt, um während kurzer Fahrtunterbrechungen oder am Reiseziel genügend Wasser zum Kochen oder waschen bzw. zur Benutzung der sanitären Anlagen bereitzustellen. Ist der Wassertank im Bereich der Radachse angeordnet, so kann durch eine unterschiedliche Befüllung des Wassertanks die Auflagelast nicht merklich verändert werden. Die bisher bekannten Wohnwagen mit einem Wassertank, der im Abstand zur Radachse angeordnet ist, erlauben nur eine unzureichende Beeinflussung der Auflagelast, indem der Wassertank gegebenenfalls mehr oder weniger befüllt wird. Dies würde im Prinzip der Mitnahme eines zusätzlichen Ballastgewichts entsprechen.

Durch die Verwendung von zwei Wassertanks, die an den beiden entgegengesetzten Enden des Wohnwagens angeordnet sind und mittels einer Verbindungsleitung miteinander in Verbindung stehen, kann das mitgeführte Wasser je nach der aktuellen Beladung des Stauraums im Bereich der Deichsel oder an dem entgegengesetzten Ende des Wohnwagens entweder im vorderen Bereich oder im hinteren Bereich des Wohnwagens mitgeführt werden und auf diese Weise die Auflagelast beeinflussen. Werden beispielsweise zwei Wassertranks mit einem jeweiligen Fassungsvermögen von 50 1 im Bereich der Deichsel bzw. an dem entgegengesetzten Ende des Wohnwagens angeordnet und lediglich ein Wassertank während der Fahrt befüllt, so kann durch eine vollständige Umverteilung des mitgeführten Wassers die über die Deichsel ausgeübte Auflagelast um 100 kg oder mehr variiert werden. Wird die Einrichtung des Wohnwagens so vorgesehen und angeordnet, dass mit einer Beladung des Stauraums im Bereich der Deichsel von etwa 50 kg und bei einer Befüllung des vorderen Wassertanks mit 50 1 die gewünschte Auflagelast erreicht wird, so können beispielsweise zusätzliche 100 kg Nutzlast in dem Stauraum angeordnet werden und durch ein vollständiges Umpumpen des mitgeführten Wassers in den hinteren Wassertank die Auflagelast beibehalten werden.

Vorzugsweise ist vorgesehen, dass mindestens eine steuerbare Pumpe zwischen den beiden Wassertanks angeordnet ist. Die steuerbare Pumpe ist zweckmäßigerweise in der verbindungsleitung angeordnet und ermöglicht ein Umverteilen des mitgeführten Wassers in den beiden Wassertanks.

Zweckmäßigerweise ist die Pumpe eine Tauchpumpe, die möglichst wartungsfrei sein sollte.

Um ein vollständiges Umverteilen des mitgeführten Wassers innerhalb einer angemessenen Zeitdauer zu ermöglichen, ist vorgesehen, dass die Tauchpumpe ein Fördervolumen von mehr als 10 1/Minute bzw. von etwa 24 1/Minute oder mehr aufweist. Derartige Tauchpumpen werden bereits üblicherweise in den Wohnwagen dazu verwendet, das Wasser aus dem Wassertank zu der Spüle oder den sanitären Einrichtungen zu fördern. Die zu diesem Zweck bereits in dem Wohnwagen befindliche Pumpe kann bei einer geeigneten Anordnung und Führung der Wasserleitungen auch dazu verwendet werden, das Wasser zwischen den beiden Wassertanks umzuverteilen. Es ist jedoch auch denkbar, eine zusätzliche Tauchpumpe vorzusehen, die entweder allein oder in Kombination mit der bereits an Bord befindlichen Pumpe die Umverteilung des Wassers zwischen den beiden Wassertanks bewirkt.

Um eine rasche Kontrolle und Abschätzung der durch das mitgeführte Wasser bewirkten Veränderung der Auflagelast zu ermöglichen, ist vorgesehen, dass der Wohnwagen eine Anzeigevorrichtung für den Füllstand in den beiden Wassertanks aufweist. Die Anzeigevorrichtung kann analog oder digital sein und ist zweckmäßigerweise so angeordnet, dass sie von der Deichsel aus eingesehen werden kann.

Um eine schnelle und einfache Einstellung der über die Deichsel ausgeübten Auflagelast zu ermöglichen, ist vorgesehen, dass der Wohnwagen eine Messeinrichtung für die auf die Deichsel ausgeübte Auflagelast aufweist. Eine geeignete Messeinrichtung ist beispielsweise eine federbelastete Waage, die entweder separat mitgeführt oder in die Lagerung des Stützrads an der Deichsel integriert sein kann.

Um eine automatisierte Regelung und Einstellung der gewünschten Verteilung des mitgeführten Wassers in den beiden Wassertanks zu ermöglichen, ist vorgesehen, dass die Messeinrichtung und die Pumpe über eine Regeleinrichtung miteinander verbindbar sind. Dies kann entweder durch geeignete elektrische Leistungen oder aber insbesondere bei der Messeinrichtung für die Auflagelast mittels eines drahtlosen Senders und Empfängers bewirkt werden.

Nachfolgend wird ein Ausführungsbeispiel näher erläutert, das in der Zeichnung dargestellt ist. Es zeigt:

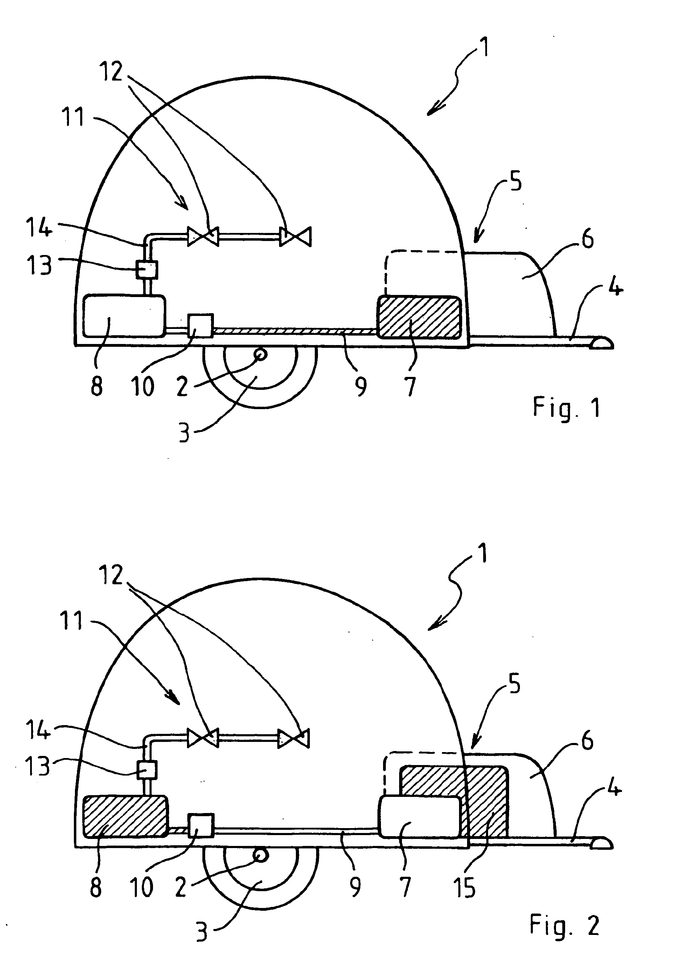

Fig. 1 einen einachsigen Wohnwagen mit einem im Bereich einer starren Deichsel angeordneten Stauraum und mit einem im Bereich der Deichsel angeordneten ersten Wassertank und mit einem an einem entgegengesetzten Ende angeordneten zweiten Wassertank, wobei der Stauraum nicht mit einer zusätzlichen Nutzlast beladen und der im Bereich der Deichsel angeordnete erste Wassertank vollständig mit Wasser befüllt ist und
Fig. 2 den in Fig. 1 dargestellten Wohnwagen, wobei der Stauraum mit einer zusätzlichen Nutzlast beladen und das mitgeführte Wasser sich in dem zweiten, an dem entgegengesetzten Ende angeordneten Wassertank befindet.

Ein in den Figuren schematisch dargestellter Wohnwagen 1 weist eine etwa mittig angeordnete, fest an einer Unterseite des Wohnwagens 1 gelagerte Radachse 2 mit zwei Rädern 3 auf. Der Wohnwagen 1 ist über eine starre Deichsel 4 mit einem nicht dargestellten ziehenden Kraftfahrzeug verbindbar. Im Bereich der starren Deichsel 4 ist ein Stauraum 5 ausgebildet, der sich teilweise im Inneren des Wohnwagens 1 befindet und teilweise in Form eines kastenförmigen Aufbaus 6 auf der starren Deichsel 4 angeordnet ist. Der Stauraum 5 könnte bei einer anderen Ausführung auch an dem entgegengesetzten Ende des Wohnwagens 1 angeordnet sein. Anstelle des kastenförmigen Aufbaus 6 könnte der Stauraum auch lediglich durch eine Standfläche oder eine Haltevorrichtung für zusätzliche Lasten gebildet sein.

Bei dem in den Figuren dargestellten Ausführungsbeispiel sind ein erster Wassertank 7 im Bereich der starren Deichsel 4 und ein zweiter Wassertank 8 an einem entgegengesetzten Ende im Inneren des Wohnwagens 1 angeordnet. Der erste Wassertank 7 ist über eine Verbindungsleitung 9 mit dem zweiten Wassertank 8 verbunden. Im hinteren Bereich des Wohnwagens 1 in Nähe des zweiten Wassertanks 8 ist eine Tauchpumpe 10 mit einer Förderkapazität von etwa 25 1/Minute angeordnet. Die Tauchpumpe 10 kann Wasser von dem ersten Wassertank 7 in den zweiten Wassertank 8 und zurück fördern.

Eine Wasserversorgung 11 des Wohnwagens 1 weist mehrere Wasserauslässe 12 und eine weitere Pumpe 13 auf, die über eine Versorgungsleitung 14 miteinander verbunden sind. Die Versorgungsleitung 14 mündet in den zweiten Wassertank 8.

In Fig. 1 ist der Fall dargestellt, dass in dem Stauraum 5 keine zusätzliche Nutzlast angeordnet ist. Um die für den Wohnwagen 1 angemessene Auflagelast zu erreichen, die über die Deichsel 4 auf das ziehende Kraftfahrzeug ausgeübt wird, ist der erste Wassertank 7 im Bereich der Deichsel 4 vollständig mit Wasser gefüllt, während der zweite Wassertank 8 an dem entgegengesetzten Ende leer ist. Zusammen mit einer in dieser schematischen Ansicht nicht dargestellten Inneneinrichtung des Wohnwagens 1 bewirkt der vollständig befüllte erste Wassertank 7 im Bereich der Deichsel 4, dass die über die Deichsel 4 ausgeübte Auflagelast sich innerhalb des für diesen Wohnwagen 1 zulässigen Bereichs befindet.

Bei dem in Fig. 2 dargestellten Fall ist in dem Stauraum 5 eine Nutzlast 15 angeordnet, die beispielsweise aus Gartenmöbeln, mehreren Fahrrädern und einem Grill bestehen kann. Durch die zusätzliche Nutzlast 15 im Bereich der Deichsel 4 würde die Auflagelast einen unzulässig großen wert annehmen. Um dem entgegenzuwirken, wurde der gesamte Wasservorrat aus dem ersten Wassertank 7 mittels der Tauchpumpe 10 in den zweiten Wassertank 8 umverteilt und bewirkt einen Ausgleich der in dem Stauraum 5 befindlichen zusätzlichen Nutzlast 15.

Die beiden Wassertanks 7, 8 können beispielsweise ein Fassungsvolumen von 20 - 70 oder mehr Litern aufweisen. Um eine möglichst große, variable zusätzliche Nutzlast 15 zu erlauben, ist es vorteilhaft, wenn die beiden Wassertanks 7, 8 ein Fassungsvermögen von 50 1 oder mehr aufweisen.

Die beiden Wassertanks 7, 8 können abweichend von dem in den Figuren dargestellten Ausführungsbeispiel auch eine andere Anordnung aufweisen und beispielsweise teilweise oder vollständig außerhalb des Wohnwagens oder zumindest im Falle des ersten Wassertanks näher an der Radachse 2 angeordnet sein. Die Tauchpumpe 10 kann mittels einer nicht dargestellten Steuereinrichtung manuell oder in Verbindung mit einer ebenfalls nicht dargestellten Regeleinrichtung automatisiert betätigbar sein. Die Wasserversorgung 11 des Wohnwagens 1 kann auch mit dem ersten Wassertank 7 und/oder mit der Verbindungsleitung 9 verbunden sein, wobei gegebenenfalls auf eine gesonderte Pumpe 13 für den Betrieb der wasserversorgung 11 des Wohnwagens 1 verzichtet werden kann.

## Patentansprüche

1. Einachsiger Wohnwagen (1) mit einer starren Deichsel (4) und mit einem im Bereich der Deichsel (4) oder an einem entgegengesetzten Ende des Wohnwagens (1.) angeordneten Stauraum, **dadurch gekennzeichnet, dass** der Wohnwagen (1) im Bereich der Deichsel (4) einen ersten Wassertank (7) und an dem entgegengesetzten Ende einen zweiten Wassertank (8) aufweist und die beiden Wassertanks (7, 8) über eine Verbindungsleitung (9) miteinander verbunden sind.

2. Wohnwagen (1) nach Anspruch 1, **dadurch gekennzeichnet, dass** mindestens eine steuerbare Pumpe zwischen den beiden Wassertanks (7, 8) angeordnet ist.

3. Wohnwagen (1) nach Anspruch 2, **dadurch gekennzeichnet, dass** die Pumpe eine Tauchpumpe (10) ist.

4. Wohnwagen (1) nach Anspruch 3, **dadurch gekennzeichnet, dass** die Tauchpumpe (10) ein Fördervolumen von mehr als 10 l/Minute, vorzugsweise von 24 l/Minute oder mehr aufweist.

5. Wohnwagen (1) nach einem der vorangehenden Ansprüche, **dadurch gekennzeichnet, dass** der Wohnwagen (1) eine Anzeigevorrichtung für den Füllstand in den beiden Wassertanks (7, 8) aufweist.

6. Wohnwagen (1) nach einem der vorangehenden Ansprüche, **dadurch gekennzeichnet, dass** der Wohnwagen (1) eine Messeinrichtung für die auf die Deichsel (4) ausgeübte Auflagelast aufweist.

7. Wohnwagen (1) nach Anspruch 6, **dadurch gekennzeichnet, dass** die Messeinrichtung und die Pumpe über eine Regeleinrichtung miteinander verbindbar sind.

## Claims

1. single-axle caravan (1) having a rigid drawbar (4) and having a stowage space arranged in the region of the drawbar (4) or at an opposite end of the caravan (1), **characterized in that** the caravan (1), in the region of the drawbar (4), has a first water tank (7) and, at the opposite end, has a second water tank (8), and the two water tanks (7, 8) are connected to one another via a connecting line (9).

2. Caravan (1) according to Claim 1, **characterized in that** at least one controllable pump is arranged between the two water tanks (7, 8).

3. Caravan (1) according to Claim 2, **characterized in that** the pump is a submersible pump (10).

4. Caravan (1) according to Claim 3, **characterized in that** the submersible pump (10) has a displacement volume of more than 10 l/minute, preferably of 24 l/minute or more.

5. Caravan (1) according to one of the preceding claims, **characterized in that** the caravan (1) has an indicator for indicating the filling level in the two water tanks (7, 8).

6. Caravan (1) according to one of the preceding claims, **characterized in that** the caravan (1) has a measuring device for measuring the bearing load to which the drawbar (4) is subjected.

7. Caravan (1) according to Claim 6. **characterized in that** the measuring device and the pump can be connected to one another via a regulating device.

## Revendications

1. Caravane à un essieu (1) avec un timon rigide (4) et avec un espace de rangement disposé dans la région du timon (4) ou à une extrémité opposée de la caravane (1), **caractérisée en ce que** la caravane (1) présente un premier réservoir d'eau (7) dans la région du timon (4) et un deuxième réservoir d'eau (8) à l'extrémité opposée et les deux réservoirs d'eau (7, 8) sont raccordés l'un à l'autre par une conduite de raccordement (9).

2. Caravane (1) selon la revendication 1,
**caractérisée en ce qu'**au moins une pompe commandable est montée entre les deux réservoirs d'eau (7, 8).

3. Caravane (1) selon la revendication 2,
**caractérisée en ce que** la pompe est une pompe submersible (10).

4. Caravane (1) selon la revendication 3,
**caractérisée en ce que** la pompe submersible (10) présente un volume de refoulement de plus de 10 l/min, de préférence de 24 l/min ou plus.

5. Caravane (1) selon l'une quelconque des revendications précédentes, **caractérisée en ce que** la caravane (1) comporte un dispositif d'affichage pour le niveau de remplissage des deux réservoirs d'eau (7, 8).

6. Caravane (1) selon l'une quelconque des revendications précédentes, **caractérisée en ce que** la caravane (1) comporte un dispositif de mesure de la charge appliquée sur le timon (4).

7. Caravane (1) selon la revendication 6,
**caractérisée en ce que** le dispositif de mesure et la pompe peuvent être reliés l'un à l'autre au moyen d'un dispositif de régulation.
